# EUROPEAN PATENT SPECIFICATION

(11) **EP 2 652 218 B1**
(45) Date of publication and mention of the grant of the patent: **11.05.2016**
(21) Application number: 11805167.1
(22) Date of filing: 15.12.2011
(51) Int. Cl.: F16B 13/12, E04B 1/76, F16B 7/02, F16B 13/06

(54) **RETAINING UNIT FOR FIXING HEAT INSULATION ELEMENTS TO A SUPPORTING STRUCTURE**
HALTEEINRICHTUNG ZUR BEFESTIGUNG VON WÄRMEDÄMMSTOFFELEMENTEN AN EINER TRÄGERSTRUKTUR
UNITÉ DE RETENUE PERMETTANT DE FIXER DES ÉLÉMENTS D'ISOLATION THERMIQUE SUR UNE STRUCTURE DE SUPPORT

(30) Priority: 17.12.2010 HU P1000673
(43) Date of publication of application: 23.10.2013
(73) Proprietor: Fazakas, Gábor, H-1114 Budapest (HU); Fazakas, Zsolt, 2045 Törökbálint (HU); Györfi, László, 1165 Budapest (HU); Pirityi, László, 1142 Budapest (HU)
(72) Inventor: FAZAKAS, Gábor, 1114 Budapest (HU); FAZAKAS, Zsolt, 2045 Törökbálint (HU); GYÖRFI, László, 1165 Budapest (HU)
(74) Representative: Ronaszéki, Tibor
(86) International application number: PCT/HU2011/000125
(87) International publication number: WO 2012/080761

(56) References cited:
- WO-A1-96/24732
- WO-A2-2007/133410
- DE-A1- 4 323 989
- DE-A1- 10 134 960
- US-A- 2 427 392
- US-A1- 2009 019 812

## Description

The invention relates to a retaining unit for fixing heat insulation elements to a supporting structure, which comprises a draw-stem, a tightening piece suitable for attaching the draw-stem to the supporting structure, and a clamp for attaching the heat insulation element to the draw-stem, where the clamp has a ball-and-socket type clamping disc with a nest and a passage-opening, and a carrying piece with a round head, where the round head of the carrying piece is fitted into the nest of the ball-and-socket type clamping disc in a way allowing it to turn around, and the carrying piece is pushed through the passage-opening of the ball-and-socket type clamping disc.

Various insulating materials have been used for a long time for protecting the internal space of structures providing living space for living creatures, especially buildings, against environmental effects. Recently solutions have become widely used, in the case of which heat insulation elements are placed subsequently on the external surface of the delimiting walls or supporting structure of buildings. The known fittings used for mounting heat insulation are based on that they contain a retaining element joining the supporting structure, a joining element suitable for retaining the heat-insulation element; and favourably a longitudinal element joining the two and extending through the heat insulation element.

Such a solution is described, for example, in patent specification no. US 2.427.392. In the case of this construction the insulation element is fixed between a base plate and a clamping plate with the help of a long nail like pin, while the pointed part of the pin extending over the insulation element makes it possible to fix the insulation element to the supporting structure too. However, the disadvantage of the solution is that it is only suitable for fixing insulation elements with a relatively small thickness, and the pin must be positioned at right angles to the plane of the supporting structure to realise the desired retaining. Another disadvantage is that the retaining creates a significant thermal bridge between the external environment and the supporting structure, which reduces the efficiency of the heat insulation.

Publication document no. DE 43 23 989 also describes a retaining unit - also suitable for fixing heat insulation - consisting of several parts. Its advantage is that the connection piece suitable for retaining the bridging element and the heat insulation element is self-adjusting due to its connection surface, and so it is also suitable for realising fixing, here the bridging element is not at right angles to the plane of the supporting structure. At the same time its disadvantage is that with this solution it is difficult to join the structural elements and retain them in a fixed position, and so it requires significant physical labour. Its further disadvantage is that due to the construction of the structural elements it creates a significant thermal bridge between the external surface in contact with the environment and the supporting structure, as a result of which it significantly reduces the efficiency of the heat insulation even when heat insulation elements with a great thickness are used.

Publication document no. WO 96/24732 relates to a retaining unit which is suitable for supporting surfacing mounted in front of the supporting structure. However, the disadvantage of this solution is that it contains numerous parts the joining and setting of which involves significant physical labour and requires special skills. Another disadvantage of the construction is that it is not really suitable for fixing building units made of softer materials, such as heat insulation boards.

The patent descriptions WO 2007/133410 and US 2009/019812 also relate to the technical field of the present invention.

Our aim with the solution according to the invention is to eliminate the deficiencies of the known retaining units suitable for fixing heat insulation on supporting structures, and to create a version that is simple to handle, can be mounted easily and quickly and is suitable for positioning heat insulation elements as desired even in the case of drawstems that are not at right angles to the frontal plane of the supporting structure.

The inventive idea is based on the recognition that if the part of the draw-stem extending into the supporting structure is constructed in a novel way so that the retaining of the draw-stem in there in a fixed position is realised by wedging it in while slightly pulling it outwards, while in the interest of fixing the heat insulation element the clamp is constructed in a novel way so that during its relative displacement on the draw-stem in the direction of the supporting structure it presses the heat insulation element against the supporting structure, then with the help of a favourably chosen tool it can be achieved that while the clamp presses the heat insulation element against the supporting structure, it slightly pulls the draw-stem outwards from the opening created on the supporting structure for the draw-stem, and in this way the draw-stem is simply pulled tight, and then it also presses the heat insulation element against the supporting structure, and so the task can be solved.

In accordance with the set aim the retaining unit according to the invention for fixing heat insulation elements to a supporting structure - which comprises a draw-stem, a tightening piece suitable for attaching the draw-stem to the supporting structure, and a clamp for attaching the heat insulation element to the draw-stem, where the clamp has a ball-and-socket type clamping disc with a nest and a passage-opening, and a carrying piece with a round head, where the round head of the carrying piece is fitted into the nest of the ball-and-socket type clamping disc in a way allowing it to turn around, and the carrying piece is pushed through the passage-opening of the ball-and-socket type clamping disc - is constructed in such a way that the external surface of the draw-stem is roughened, and a metal female cone is attached in a fixed position to the end of the draw-stem next to the supporting structure, and a cylinder-footed tightening wedge pulled onto the draw-stem is allocated to the female cone, and so the tightening piece is formed by the female cone and the cylinder-footed tightening wedge together, while in the carrying piece of the round head there is a conical hole, clamp jaws with a positioning hook are fitted into the conical hole, and the roughened surface of the draw-stem is in contact with the clamp jaws.

A further feature of the retaining unit according to the invention may be that the draw-stem is made of fibre-reinforced plastic.

In a possible version of the retaining unit the cylinder-footed tightening wedge is temporarily pulled onto the draw-stem, and it is coupled with a rigid punch-tube to prevent the cylinder-footed tightening wedge from sliding back.

In the case of another different construction of the invention one or more cylindrical-conical tightening wedges are inserted between the cylinder-footed tightening wedge and the female cone of the draw-stem.

In the case of a further different realisation of the retaining unit a positioning collar is placed on the carrying piece of the round head, and the part of the ball-and-socket type clamping disc situated near the passage-opening is clamped between the positioning collar and the round head of the carrying piece so that it can be moved. In the case of this construction the ball-and-socket type clamping disc and the carrying piece with a round head forming the clamp, and the clamp jaws with a positioning hook favourably form one single fitting unit.

In the case of an even further version of the invention, in the fitted position of the retaining unit on the side of the ball-and-socket type clamping disc opposite the heat insulation element the roughened draw-stem ends in the external plane of the ball-and-socket type clamping disc, or in the fitted position of the retaining unit on the side of the ball-and-socket type clamping disc opposite the heat insulation element the roughened draw-stem extends over the external plane of the ball-and-socket type clamping disc.

The most important advantage of the retaining unit according to the invention is that due to its novel construction it is suitable for fixing heat insulation elements of a greater thickness having lower strength characteristics in a quick and simple way and without any special skills, even when the draw-stem is not at right angles to the plane of the supporting structure.

Another advantage of the solution is that the use of the retaining unit reduces the intensity of the thermal bridge, and at the same time it improves the efficiency of the heat insulation, which results in significant savings especially in the case of subsequently fitted heat insulation on buildings.

A further advantage of the retaining unit according to the invention is that due to the optional setting of the length of the draw-stem, heat insulation elements of different thicknesses can be fitted using the same set of tools. Different sets of production tools are required for each currently used solution for fitting heat insulation elements suiting the thickness of the given heat insulation.

It is also an advantage that due to the specific structural elements and their novel joining, if during the use of the retaining unit the lateral forces generated on the draw-stem and the weight of the heat insulation element are counterbalanced, then no adhesive needs to be applied on the back of the heat insulation element, between the supporting structure and the heat insulation element, which results in a further reduction in physical labour and material costs, which, in the end, has a beneficial effect on investment costs.

A further advantage deriving from the use of the fibre-reinforced plastic draw-stem is that it is able to transfer the force needed for fixing between the supporting structure and the heat insulation element even with the use of a smaller structural cross-section, reducing by this the cross-section available for thermal conduction even more and minimising the thermal bridge between the supporting structure and the external environment.

It can also be regarded as an advantage that in the case that a decorative brick or stone wall surfacing is built in front of the heat insulation element, by keeping the roughened fibre-reinforced plastic draw-stem at the appropriate length and fixing it in the grouting between the decorative bricks or stones, the retaining unit according to the invention, even by itself, is able to retain the wall surfacing anchored back, free of thermal bridges. In the case of the known solutions it can be realised only by using separate fittings or separate stainless steel pins creating a thermal bridge.

Below the invention is described in detail in connection with construction examples, on the basis of drawings. In the drawings
- figure 1: shows the construction of one end of the retaining unit and the operation of the tightening piece situated therein, partly in section,
- figure 2: shows the placement of the draw-stem forming a part of the retaining unit in the building structure,
- figure 3: shows the end of the retaining unit near the clamp,
- figure 4: shows the construction of the clamp of the retaining unit partly in section,
- figure 5: shows the part of the retaining unit near the clamp when the retaining unit is fitted,
- figure 6: shows the fitted retaining unit partly in section,
- figure 7: shows the side-view of the end_{'} of the retaining unit near the clamp in a possible fitted position of the retaining unit, partly in section,
- figure 8: shows the side-view of the end of the retaining unit near the clamp in another possible fitted position of the retaining unit, partly in section.

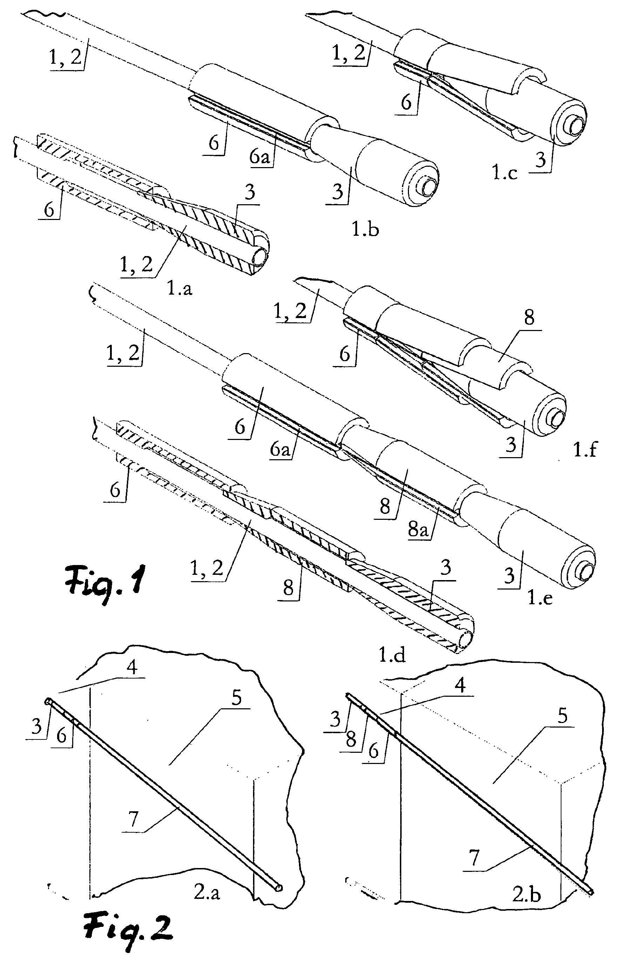

Figure 1 shows the end of the fibre-reinforced plastic draw-stem 2 near the supporting structure 4 shown in figure 2. It can be seen that the tightening piece is attached to the end of the draw-stem 2 in a fixed position, and it is formed by a female cone 3 the conical part of which is facing the draw-stem 2 and by a cylinder-footed tightening wedge 6 pulled onto the draw-stem 2 in such a way that it can be moved. This female cone 3 - as shown in figure 1c - forces apart the cylinder-footed tightening wedge 6 pulled onto the roughened 1 draw-stem 2, having a slit 6a and made of metal or plastic.

If the material of the supporting structure 4 has lower resistance, as shown in figures1d-1f, one or more metal or plastic cylindrical-conical tightening wedges 8 are inserted between the cylinder-footed tightening wedge 6 and the female cone 3. These cylindrical-conical tightening wedges 8 also have a slit 8a as a result of which they can come apart as shown in figure 1f.

Figure 2 shows the placement of the draw-stem 2 of the retaining unit in the supporting structure 4 and in the heat insulation element 5. It can be seen that the female cone 3 of the draw-stem 2 is in the borehole of the supporting structure, and it can be seen how the cylinder-footed tightening wedge 6 and the cylinder-footed tightening wedge 6 supplemented with the cylindrical-conical tightening wedge 8 fastens the roughened 1 fibre-reinforced plastic draw-stem 2 through the drilled heat insulation element 5, in the borehole of the supporting structure 4 drilled at an angle between 0-12°.

When the cylinder-footed tightening wedge 6 is pushed into the borehole of the supporting structure 4, it is prevented from sliding back by the rigid punch-tube 7, which also stiffens the draw-stem 2 to prevent it from bending. After the cylinder-footed tightening wedge 6 has been pushed into the borehole of the supporting structure 4, it is forced apart along the slit 6a on the two sides when the rigid punch-tube 7 is punched in, and so it is fastened in the borehole of the supporting structure 4 in a fixed position.

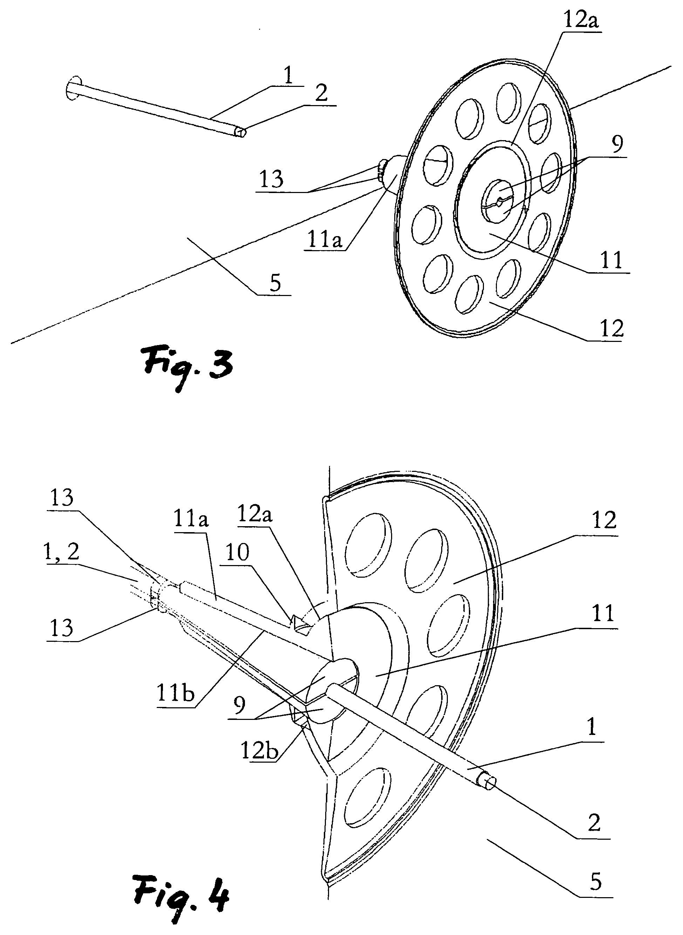

Figures 3 and 4 show the clamp that can be fitted to the end of the roughened 1 fibre-reinforced plastic draw-stem 2 extending out from the borehole of the drilled heat insulation element 5. The clamp is formed by a ball-and-socket type clamping disc 12, a carrying piece 11a with a round head 11, and clamp jaws 9. Due to the use of the positioning hook 13, ball-and-socket type clamping disc 12 with a nest 12a and a passage-opening 12b, the carrying piece 11a having a positioning collar and ending in a round head 11, and the clamp jaws 9 placed in the conical hole 11b of the carrying piece 11a and secured with the positioning hook 13 all form one single unit, and so they are easy to handle and mount. The carrying piece 11a is pushed through the passage-opening 12b passing over the nest 12a of the ball-and-socket type clamping disc 12 in such a way that the round head 11 of the carrying piece 11a is in contact with the nest 12a of the ball-and-socket type clamping disc 12 having a spherical shell surface, while the clamp jaws 9 are fitted into the conical hole 11b of the carrying piece 11a, where they are supported by the positioning hook 13 to prevent them from sliding out of the conical hole 11b of the carrying piece 11 a. The positioning hook 13 catches the clamp jaws 9 at the end of the carrying piece 11a opposite the round head 11.

Figure 4 also shows how the clamp jaws 9 caught by the positioning hook 13 fasten the rougherted 1 fibre-reinforced plastic draw-stem 2 in the conical hole 11b of the carrying piece 11 a of the round head 11 with a positioning collar 10 sitting in the ball-and-socket type clamping disc 12.

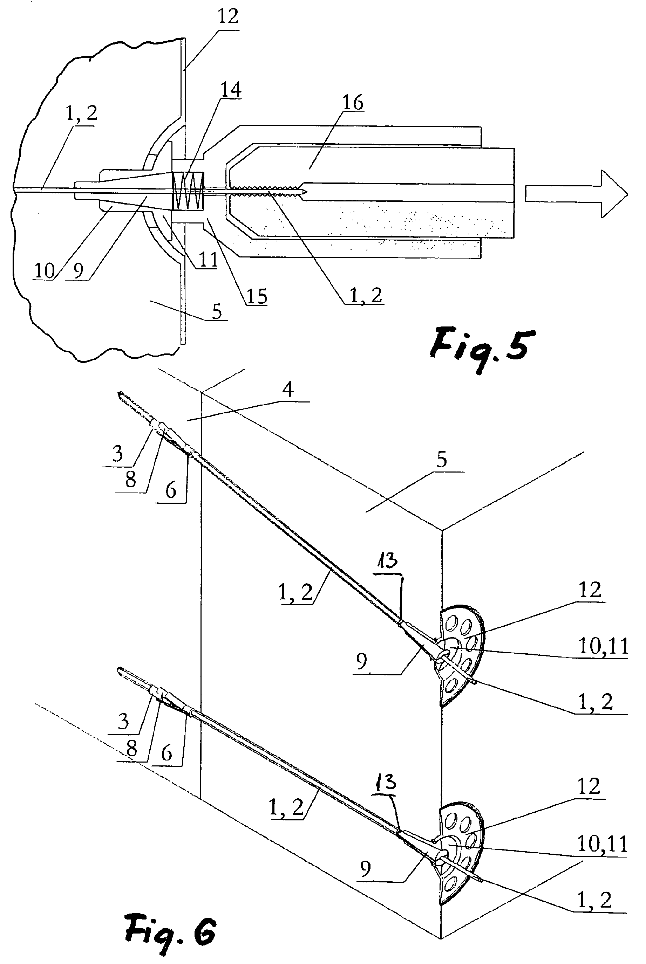

Figure 5 shows how the clamp tightens the roughened 1 fibre-reinforced plastic draw-stem 2 with the help of a suitable flanged stem-drawing tool 15 in order to fasten the heat insulation element 5. The flanged stem-drawing tool 15 has a drawplate 16 and a counter-spring 14. When the drawplate 16 of the flanged stem-drawing tool 15 is drawn, the counter-spring 14 pushes the clamp jaws 9 towards the heat insulation element 5, while the drawplate 16 itself draws the draw-stem 2 towards itself during its relative displacement towards the heat insulation element 5. At this point the flanged stem-drawing tool 15 bears up against the round head 11 and pushes the round head 11 up along the roughened 1 fibre-reinforced plastic draw-stem 2, and by permanently pushing forward the clamp jaws too with the help of the counter-spring 14 it also ensures a permanent clamping connection between the draw-stem 2 and the ball-and-socket type clamping disc 12.

While the round head 11 moves towards the heat insulation element 5 along the draw-stem 2 fitted at right angles or at an angle with respect to the plane of the supporting structure 4, due to the ball-and-socket type connection it also carries the ball-and-socket type clamping disc 12 with itself, as a result of which the ball-and-socket type clamping disc 12 presses the heat insulation element 5 against the supporting structure 4. At the same time, in the borehole of the supporting structure 4 the female cone 3 fixed to the draw-stem moving outwards from the borehole continues to force apart the cylinder-footed tightening wedge 6 and the cylindrical-conical tightening wedge(s) 8 in the borehole of the supporting structure 4, as a result of which the end of the roughened 1 fibre-reinforced plastic draw-stem 2 with the female cone 3 is also fastened in the supporting structure with a perpendicular or slanted axis. This final mounted state is shown in figure 6.

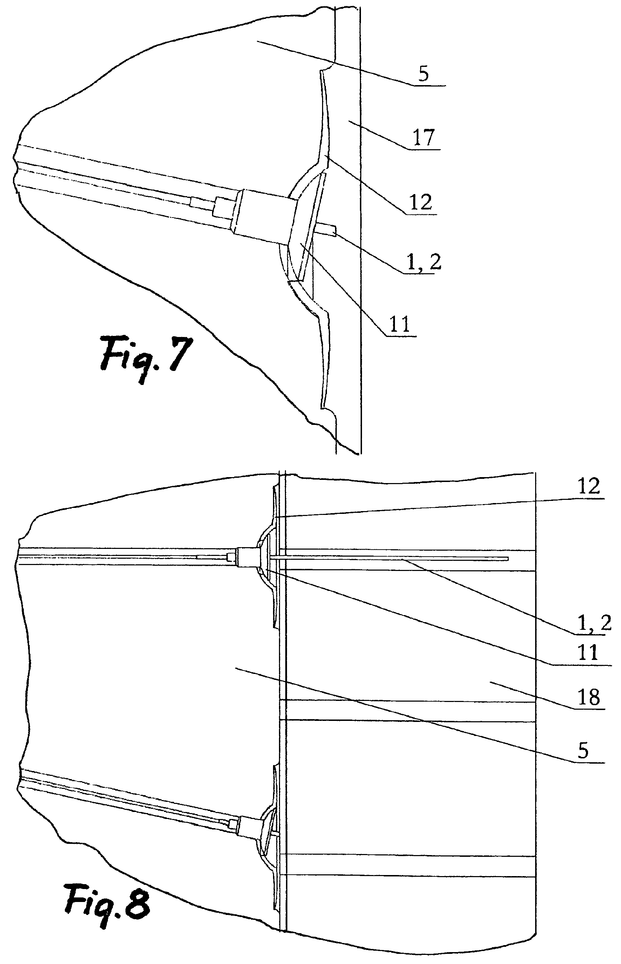

Figure 7 shows a possible fitted position of the retaining unit, where the roughened 1 fibre-reinforced plastic draw-stem 2 is situated below the plastering 17 applied onto the heat insulation element 5. In this case the draw-stem 2 must be cut off before the round head fitting into the nest 12a of the ball-and-socket type clamping disc 12.

If a decorative brick or other stone wall surfacing 18 is built in front of the heat insulation element 5, by keeping an appropriate length of the roughened 1 fibre-reinforced plastic draw-stem 2 extending over the round head 11 fitting into the nest 12a of the ball-and-socket type clamping disc 12, and by fixing it in the grouting in the decorative brick or other stone wall surfacing 18, it retains the wall surfacing 18 anchored back, free from thermal bridges, as shown in figure 8.

The retaining unit according to the invention can be favourably used for the simple and quick fixing of all types of heat insulation elements to a supporting structure while saving physical labour, materials and energy.

**List of references**

| | |
|---|---|
| 1 roughening | |
| 2 draw-stem | |
| 3 female cone | |
| 4 supporting structure | |
| 5 heat insulation element | |
| 6 cylinder-footed tightening wedge | 6a slit |
| 7 rigid punch-tube | |
| 8 cylindrical-conical tightening wedge | 8a slit |
| 9 clamp jaw | |
| 10 positioning collar | |
| 11 round head | 11a carrying piece |
| | 11b conical hole |
| 12 ball-and-socket type clamping disc | 12a nest |
| | 12b passage-opening |
| 13 positioning hook | |
| 14 counter-spring | |
| 15 flanged stem-drawing tool | |
| 16 drawplate | |
| 17 plastering | |
| 18 wall surfacing | |

## Claims

1. Retaining unit for fixing heat insulation elements to a supporting structure, which comprises a draw-stem (2), a tightening piece suitable for attaching the draw-stem (2) to the supporting structure (4), and a clamp for attaching the heat insulation element (5) to the draw-stem (2), where the clamp has a ball-and-socket type clamping disc (12) with a nest (12a) and a passage-opening (12b), and a carrying piece (11a) with a round head (11), where the round head (11) of the carrying piece (11a) is fitted into the nest (12a) of the ball-and-socket type clamping disc (12) in a way allowing it to turn around, and the carrying piece (11a) is pushed through the passage-opening (12b) of the ball-and-socket type clamping disc (12), **characterised by** that the external surface of the draw-stem (2) is roughened (1), and a metal female cone (3) is attached in a fixed position to the end of the draw-stem (2) next to the supporting structure (4), and a cylinder-footed tightening wedge (6) pulled onto the draw-stem (2) is allocated to the female cone (3), and so the tightening piece is formed by the female cone (3) and the cylinder-footed tightening wedge (6) together, while in the carrying piece (11 a) of the round head (11) there is a conical hole (11b), clamp jaws (9) with a positioning hook (13) are fitted into the conical hole (11b), and the roughened (1) surface of the draw-stem (2) is in contact with the clamp jaws (9).

2. Retaining unit as in claim 1, **characterised by** that the draw-stem (2) is made of fibre-reinforced plastic.

3. Retaining unit as in claim 1 or claim 2, **characterised by** that the cylinder-footed tightening wedge (6) is temporarily pulled onto the draw-stem (2), and it is coupled with a rigid punch-tube (7) to prevent the cylinder-footed tightening wedge (6) from sliding back.

4. Retaining unit as in any of claims 1-3, **characterised by** that one or more cylindrical-conical tightening wedges (8) are inserted between the cylinder-footed tightening wedge (6) and the female cone (3) of the draw-stem (2).

5. Retaining unit as in any of claims 1-4, **characterised by** that a positioning collar (10) is placed on the carrying piece (11a) of the round head (11), and the part of the ball-and-socket type clamping disc (12) situated near the passage-opening (12b) is clamped between the positioning collar (10) and the round head (11) of the carrying piece (11a) so that it can be moved.

6. Retaining unit as in claim 5, **characterised by** that the ball-and-socket type clamping disc (12) and the carrying piece (11a) with a round head (11) forming the clamp, and the clamp jaws (9) with the positioning hook (13) form one single fitting unit.

7. Retaining unit as in any of claims 1-6, **characterised by** that in the fitted position of the retaining unit, on the side of the ball-and-socket type clamping disc (12) opposite the heat insulation element (5) the roughened (1) draw-stem (2) ends in the external plane of the ball-and-socket type clamping disc (12).

8. Retaining unit as in any of claims 1-6, **characterised by** that in the fitted position of the retaining unit, on the side of the ball-and-socket type clamping disc (12) opposite the heat insulation element (5) the roughened (1) draw-stem (2) extends over the external plane of the ball-and-socket type clamping disc (12).

## Patentansprüche

1. Die Einheit zur Befestigung von Wärmedämmung Elemente zu einer tragenden Struktur, bestehend aus einem Draw-Schaft (2), eine Verschärfung Stück geeignet für die Befestigung der Draw-Schaft (2) an der Tragkonstruktion (4) und eine Klemme zum Befestigen der Wärmedämmung Element (5) an der Zugstange (2), wo die Schelle hat einen Ball-and-socket Typ Klemmscheibe (12) mit einem Nest (12a) und eine Passage - die Öffnung (12b), und ein tragendes Stück (11a) mit einem runden Kopf (11), wo die runden Kopf (11) Der Satz (11a) angebracht ist, in das Nest (12a) der Kugel-und-Buchse Typ Klemmscheibe (12) in einer Weise Es herum zu drehen, und dem Buchwert Stück (11a) durch den Kanal-Öffnung (12b) der Kugel-und-Buchse Typ Klemmscheibe (12), **dadurch gekennzeichnet, dass** die äußere Oberfläche des draw-Schaft (2) ist angeraut (1) und eine Metal Female Lagerkegel (3) befestigt ist in einer festen Position an das Ende der Zugstange (2) Neben der Tragkonstruktion (4) und einem Zylinder-footed anziehen Keil (6) zog auf den Draw-Schaft (2) ist für die weiblichen Lagerkegel (3), und so die Verschärfung Stück wird gebildet durch die weibliche Kegel (3) und die Zylinder-footed anziehen Keil (6) zusammen, während in der Tragetasche Stück (11a) des runden Kopf (11) Es ist ein konischer Loch (11b), Klemmbacken (9) mit einer Positionierung des Hakens (13) montiert sind, in die konische Bohrung (11b) und die Oberfläche aufgeraut (1) der Zugstange (2) ist in Kontakt mit den Klemmbacken (9).

2. Die Einheit wie in Anspruch 1, **dadurch gekennzeichnet, dass** der Ventilschaft (2) ist aus faserverstärktem Kunststoff.

3. Die Einheit wie in Anspruch 1 oder 2, **dadurch gekennzeichnet, dass** der Zylinder-footed anziehen Keil (6) wird vorübergehend auf den Draw-Schaft (2), und Er ist gekoppelt mit einer starren Punch-Rohr (7), um zu verhindern, dass die Zylinder-footed anziehen Keil (6) aus dem zurückschieben.

4. Die Einheit wie in einem der Ansprüche 1-3, **dadurch gekennzeichnet, dass** eine oder mehrere zylindrisch-konischen Keile (8) festzuziehen sind zwischen den Zylinder-footed anziehen Keil (6) und die weibliche Lagerkegel (3) des draw-Schaft (2).

5. Die Einheit wie in einem der Ansprüche 1-4, **dadurch gekennzeichnet, dass** eine Positionierung der Muffe (10) wird auf die Durchführung Stück (11a) des runden Kopf (11), und den Teil des Kugel-und-Buchse Typ Klemmscheibe (12) liegt in der Nähe der Passage - die Öffnung (12b) ist gespannt zwischen der Positionierung Muffe (10) und den runden Kopf (11) Der Satz (11a), so dass sie nicht verschoben werden.

6. Die Einheit wie in Anspruch 5, **dadurch gekennzeichnet, dass** der Ball-and-socket Typ Klemmscheibe (12) und der Satz (11a) mit einem runden Kopf (11) bildet die Klammer und die Klemmbacken (9) Mit der Positionierung des Hakens (13) bilden eine passende Einheit.

7. Die Einheit wie in einem der Ansprüche 1-6, **dadurch gekennzeichnet, dass** in der Position der Einheit, auf der Seite der Kugel-und-Buchse Typ Klemmscheibe (12) Gegenüber der Wärmedämmung Element (5) Die aufgeraute (1) Draw-Schaft (2) endet in der externen Ebene des Kugel-und-Buchse Typ Klemmscheibe (12).

8. Die Einheit wie in einem der Ansprüche 1-6, **dadurch gekennzeichnet, dass** in der Position der Einheit, auf der Seite der Kugel-und-Buchse Typ Klemmscheibe (12) Gegenüber der Wärmedämmung Element (5) Die aufgeraute (1) Draw-Schaft (2) erstreckt sich über die externe Ebene des Kugel-und-Buchse Typ Klemmscheibe (12).

## Revendications

1. Unité de retenue pour la fixation des éléments d'isolation thermique á une structure porteuse, qui se compose d'une tige de tirage (2), une pièce de serrage conviennent pour la fixation de la tige de tirage (2) de la structure de charge (4), et un collier de serrage pour fixation de l'élément d'isolation thermique (5) pour le tirage de la tige (2), où le collier a disque de serrage á joint de rotule (12) avec un nid (12a) et un passage-d'ouverture (12b), et une exécution pièce (11a) avec la tête ronde (11), où la tête ronde (11) de l'élément porteur (11a) est monté dans le nid (12a) de la bille et du disque de serrage á joint de rotule (12) d'une façon qui lui permet de tourner autour et à l'exécution pièce (11a) est poussé à travers le passage à l'ouverture (12b) de la bille et de la douille de serrage de type disque (12), **caractérisé par le fait que** la surface externe de la tige de tirage (2) est rugueux (1), et d'un métal cône femelle (3) est fixé en position fixe à la fin du tirage au sort de la tige (2) à côté de la structure porteuse (4), et un fendeur á base cylindrique (6) tiré sur le tirage de la tige (2) est affectée au cône femelle (3), de sorte que la pièce de serrage est formé par le cône femelle (3) et le fendeur á base cylindrique (6) ensemble, tandis que dans l'exercice pièce (11a) de la tête ronde (11) Il y a un conique Trou (11b), mâchoires de pince (9) avec un crochet de positionnement (13) sont montés dans le trou conique (11b), et l'rugueuse (1) surface de la tige de tirage (2) est en contact avec les mâchoires de pince (9).

2. L'Unité de fixation, selon la revendication nr. 1, **caractérisé par le fait que** la tige de tirage (2) est construite en plastique á fibre renforcé.

3. L'Unité de fixation, selon la revendication nr. 1 ou nr. 2, **caractérisé par le fait que** le fendeur á base cylindrique (6) tiré temporairement sur la tige (2), et qu'il est couplé avec un poinçon rigide-tube (7) pour empêcher le fendeur á base cylindrique (6) de glisser en arrière.

4. Selon n'importe quel des revendications nr. 1-3 l'unité de fixation, **caractérisé par** l'insertion d'une ou plusieurs cales de serrage cylindro-conique (8) entre le fendeur á base cylindrique (6) et le cône femelle (3) du tirage de la tige (2).

5. Selon n'importe quel des revendications nr. 1-4 l'unité de fixation, **caractérisé par** un collier de positionnement (10) est placé sur l'exécution pièce (11a) de la tête ronde (11), et la part de la bille et de la douille de serrage de type disque (12) situé près du passage à l'ouverture (12b) est serré entre le collier de positionnement (10) et la tête ronde (11) de l'élément porteur (11a) de façon à ce qu'il peut être déplacé.

6. Selon la revendication nr. 5 de l'unité de fixation, **caractérisé par le fait que** le disque de serrage á joint de rotule (12), l'élément porteur (11a) et la tête sphérique (11), forment une pièce de montage unique avec le collier de serrage (9) et le crochet de positionnement (13).

7. Selon n'importe quel des revendications 1-6, l'unité de fixation, **caractérisé par le fait que** l'unité de montage quand monté en place avec le disque de serrage á joint de rotule (12) en face de l'élément d'isolation thermique (5) la tige de tirage (2) rugueux (1) se termine dans le plan extérieur du le disque de serrage á joint de rotule (12).

8. Selon n'importe quel des revendications 1-6 l'unité de fixation, **caractérisé par le fait que** dans l'unité de fixation en situation monté la montée avec le disque de serrage á joint de rotule (12) en face de l'élément d'isolation thermique (5) la tige de serrage (2) rugueux (1) s'étend en dehors du plan extérieur du disque de serrage á joint de rotule (12).
